Europäisches Patentamt

**European Patent Office**

Office européen des brevets

(11) Numéro de publication: **0 090 737**
**B1**

(12) **FASCICULE DE BREVET EUROPEEN**

(45) Date de publication du fascicule du brevet:
05.02.86

(51) Int. Cl.⁴: **A 23 C 19/068**, A 01 J 27/00

(21) Numéro de dépôt: **83400633.0**

(22) Date de dépôt: **25.03.83**

(54) **Fromage décoré de façon permanente dans sa croûte, procédés pour sa fabrication et dispositifs pour la mise en oeuvre de ces procédés.**

(30) Priorité: **31.03.82 FR 8205571**

(43) Date de publication de la demande:
**05.10.83 Bulletin 83/40**

(45) Mention de la délivrance du brevet:
**05.02.86 Bulletin 86/6**

(84) Etats contractants désignés:
**AT BE CH DE FR GB IT LI LU NL SE**

(56) Documents cités:
**CH - A - 263 636**
**DE - A - 2 623 424**
**FR - A - 1 441 737**

(73) Titulaire: **BONGRAIN S.A., Le Moulin a vent,**
**F-78280 Guyancourt (FR)**

(72) Inventeur: **Chauvin, Bernard Louis, La Duporterie Le**
**Vieil Baugé, F-49150 Bauge (FR)**

(74) Mandataire: **Ayache, Monique et al, CABINET**
**PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention concerne la décoration des fromages, notamment en vue de leur identification. Elle a plus particulièrement pour objet des fromages portant des décors permanents et indélébiles d'identification et/ou destinés à délimiter des portions, des procédés pour leur obtention et des dispositifs pour la mise en oeuvre de ces procédés.

En particulier pour répondre aux exigences de la législation telles que l'étiquetage obligatoire, les fromages sont normalement commercialisés avec des moyens d'identification tels que:
- etiquette imprimée collée sur le fromage,
- papier d'emballage imprimé,
- boitage de suremballage imprimé ou muni d'une étiquette imprimee,
- forme particulière caractéristique du type de fromage concerné ou protégée, notamment par une marque de commerce,
- estampille imprimée dans le fromage sur une ou deux faces (par exemple gruyère ou fromage des pyrénées) ou sur le talon (par exemple raclette),
- marque de caséine fondue dans la croûte du fromage pour certaines pàtes cuites, essentiellement pressées, d'origine contrôlée,
ces moyens d'identification pouvant éventuellement être combinés.

Par ailleurs, certains fromages tels que les spécialités dites 'à la coupe' sont munis d'une étiquette délimitant des portions, alors que d'autres ont une forme particulière facilitant la découpe en portions. Enfin il existe également des fromages, essentiellement frais ou à pàte molle ou fondue, qui sont commercialisés en portions prédécoupées, emballées et rassemblées dans une boéte, comme par exemple les crèmes de gruyère.

Les moyens d'identification tels qu'étiquettes papiers d'emballage et boîtages imprimés qui en général présentent un aspect attrayant disparaissent lorsque le fromage est mis sur un plateau. Par ailleurs, les estampilles qu en raison de leur mode d'application on ne rencontre que sur certains fromages à pâte pressée de grand format tels que le gruyère ou la raclette et qui ne peuvent être constituées que de formes grossières sans caractère attractif, sont scindées par la découpe au moment de l'achat par le consommateur et ne permettent plus alors l'identification du fromaet indélébile.

L'invention a pour but de fournir un tel fromage. Elle a plus particulièrement pour objet un fromage décoré de façon permanente et indélébile, caractérisé en ce que son décor, faisant partie intégrante de la croûte et inséparable de celle-ci, présente au moins deux colorations différentes obtenues par croissance de microorganismes différents.

Certes le document DE-A-2623 424 concerne des fromages qui présentent des signes distinctifs réalisés en partie grâce à des moisissures. Toutefois, il ne décrit aucunement la réalisation d un décor par croissance d'au moins deux microorganismes différents et ne suggere pas meme la possibilité de réaliser un tel décor.

Selon un mode de réalisation particulierement simple de l'invention, le décor du fromage résulte du fait que le talon présente une coloration différente de celle d au moins 1 une des faces. Cette différence de coloration est obtenue par croissance, au cours de l'affinage, sur le talon et la ou les faces que 1 on veut décorer différemment, de microorganismes produisant des couleurs différentes.

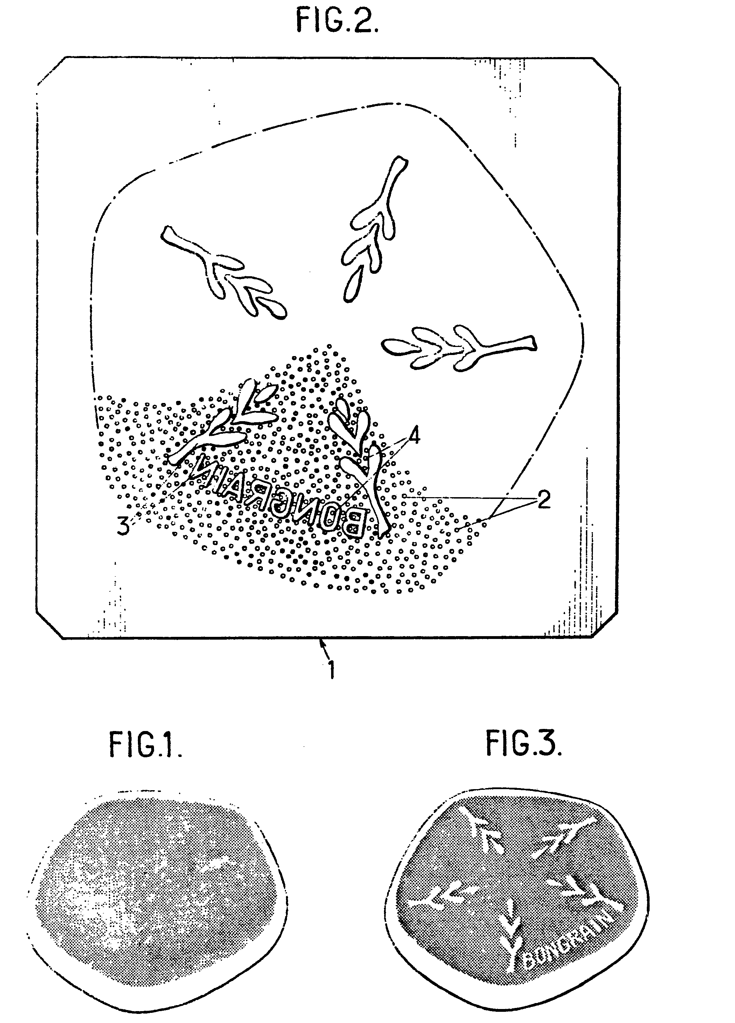

La figure 1 des dessins annexés représente un fromage à pâte molle dont le décor résulte de la coloration différente de l'une de ses faces et du talon par des microorganismes différents, l'autre face, non représentée, pouvant être colorée de la même façon que le talon ou que la premiere face, voire même avoir une coloration différente des deux précédentes.

Dans le cas particulier de la figure 1, le talon est coloré en blanc par croissance de la moisissure Penicillium candidum, tandis que la face visible à croûte lavée, est colorée en ocre par croissance de bactéries de type Bacterium linens.

Ce mode de réalisation de l'invention, particulièrement simple, ne permet cependant qu'une gamme limitée de combinaisons différentes de couleurs, mais surtout ne fournit pas des fromages décorés avec des graphismes servant par exemple à l'identification et/ou pour la découpe en portions.

Selon un autre mode de réalisation offrant de plus larges possibilités, l'invention fournit un fromage décoré dont au moins une face et/ou le talon comprend une surface sensiblement plane dans laquelle est incorporé un graphisme en creux ou en relief, la surface sensiblement plane et le graphisme étant colorés différemment.

Pour fabriquer un fromage décoré, selon l'invention, portant un graphisme en creux ou en relief, on peut avoir recours au procédé caractérisé en ce qu'il comprend :
- une étape consistant à imprimer avant l'affinage, de préférence à un stade avancé de l'égouttage, un graphisme sur une surface sensiblement plane d'au moins l'une des faces et/ou du talon ; et après l'impression de ce graphisme,
- une étape consistant à produire des colorations différentes sur la surface sensiblement plane et sur le graphisme par croissance de microorganismes différents, au cours de l'affinage.

Le graphisme peut être imprimé par tout moyen fournissant une impression qui ne disparaisse pas au cours de l'affinage et des différents traitements ultérieurs. En particulier, les 'creux' ou 'reliefs' doivent avoir une épaisseur minimum qui dépend dans une large mesure du type de fromage fabriqué et des traitements ultérieurs. L'homme du métier pourra facilement déterminer dans chaque cas, par des essais préalables simples, l'épaisseur du graphisme à appliquer.

Pour réaliser une impression en relief on peut utiliser une plaque ou un store d'impression sur lesquels un graphisme symétrique, par rapport à un plan, du graphisme à imprimer constitué notamment de lettres, apparaît en creux sur la face utile. Cependant, pour que le fromage puisse bien pénétrer dans le graphisme sous l'effet de son poids et éventuellement d'une pression ou dépression extérieure et conserve ainsi l'empreinte en relief de ce graphisme, il est très souhaitable que le graphisme soit constitué par des évidements de la plaque ou du store d'impression ; dans ces conditions, les types de graphismes que l'on peut imprimer en relief, de façon satisfaisante, sont en nombre limité. Il s'agit essentiellement de lettres ou de formes géométriques simples.

Par contre, l'impression d'un graphisme en creux sur l'une des faces ou sur le talon au moyen d'un dispositif d'impression portant en relief le graphisme symétrique, par rapport à un plan, dudit graphisme à imprimer s'effectue de façon plus aisée car alors c'est le graphisme en relief qui pénètre dans le fromage et il peut y laisser une empreinte indélébile, même lorsque sa structure est relativement fine et complexe.

On préfère donc réaliser une impression en creux sur le talon ou de préférence encore sur l'une des faces au moins du fromage. Dans ce dernier cas en particulier, il n'est pas nécessaire d'exercer une pression extérieure pour imprimer efficacement le graphisme.

Donc, selon un mode particulièrement avantaqeux de réalisation, le graphisme est imprimé en creux dans une surface sensiblement plane du talon ou de l'une des faces et la surface sensiblement plane et le graphisme en creux sont colorés differemment par croissance de microorganismes différents.

Pour appliquer un graphisme en creux, notamment s'il est relativement simple, sur l'une des faces du fromage, on peut intercaler, notamment pendant la phase finale de l'égouttage, une plaque d'impression limitée au motif à imprimer, entre le store d'égouttage habituel et le fromage.

Selon un mode de réalisation particulièrement avantageux et préféré de l'invention, pour appliquer un graphisme en creux sur l'une des faces d'un fromage, on utilise, de préférence à un stade avancé de l'égouttage, notamment au dernier stade, un store comportant en relief, le graphisme symétrique, par rapport à un plan, du graphisme à imprimer.

La figure 2 représente de façon schématique et en plan la face utile d'un exemple d'un tel store destiné à imprimer un graphisme en creux. Ce store comprend essentiellement une plaque perforée de préférence semi-rigide 1 d'un matériau avantageusement résistant entre autres à l'usure, aux chocs, à la déformation et aux lavages industriels quotidiens, tel que du polypropylène.

Cette plaque qui a éventuellement les dimensions et la forme finales désirées pour le fromage comporte, au moins dans sa partie utile représentée partiellement à la figure 2, une multitude de perforations 2 et porte, sur au moins l'une de ses faces, un graphisme 3, partiellement représenté, en relief, symétrique, par rapport à un plan, du graphisme à imprimer servant à la fois à délimiter des portions (rameaux schématisés) et à véhiculer la marque du fabricant (ici, à titre d'exemple, marque déposée BONGRAIN représentée, pour simplifier, sur l'une des 'portions' seulement). Ce graphisme en relief du store peut résulter de la déformation de la plaque, par exemple par emboutissage ; dans ce cas il est en relief sur la face utile et en creux sur l'autre face. Il peut également résulter d'un apport supplémentaire de matière (constitutive de la plaque ou autre) ; alors le graphisme n'apparaît que sur la face utile.

Quoi qu'il en soit et quel que soit le mode deréalisation du graphisme sur le store, le graphisme doit avoir une structure telle qu'il soit capable de s'imprimer de façon indélébile dans le fromage lorsqu'il est mis en contact avec lui, notamment à un stade avancé de l'égouttage.

La distribution des perforations 2 et leur taille sont avantageusement telles que la face du fromage traitée avec le store apparaisse lisse et bien plane en dehors du graphisme imprimé, ce qui permettra ensuite au graphisme, lors de l'affinage sur claie, d'être protégé par cette surface portante plane.

Pour ce faire, les perforations 2 ont de préférence un diamètre de l'ordre de 1,5 à 2,5 mm et une densité de 5 à 8 perforations par cm$^2$.

Il est important que les zones du store très voisines des différentes parties du graphisme, par exemple l'intérieur des lettres, ccmportent des perforations 4 de l'ordre de 1 à plusieurs millimètres de diamètre. Ces perforations permettent à l'air, lors du contact du store avec le fromage, de s'échapper et d'obtenir un graphisme régulier et complet sur le fromage.

Les perforations 2 et 4 du store, identiques ou différentes, peuvent avoir une forme cylindrique, mais sont cependant de préférence côniques, en particulier les perforations 4.

Les parties en relief du store (graphisme) ne comportent en principe pas de perforations. pour réaliser l'impression, de préférence à un stade avancé de l'égouttage, on pose le fromage sur la face utile du store. L'impression se fait alors sous l'effet du poids du fromage, sans autre moyen de pression. Il suffit pour cela que le temps de contact entre le fromage et le store soit suffisant pour que la pàte constitutive du fromage entre bien en contact avec les parties 'planes' du store et que l'égouttage normal du fromage soit pratiquement termine.

On peut ainsi notamment réaliser au moyen du store selon l'invention, des impressions en creux sur l'une ou les deux faces du fromage.

Par exemple, pour réaliser une impression sur les deux faces on peut 'prendre le fromage en sandwich' entre deux stores en appliquant une pression, ou retourner le fromage au cours d'un stade avancé d'égouttage, notamment du dernier.

Toutefois, essentiellement pour des raisons pratiques, on préfère réaliser une impression en creux sur une seule face du fromage.

Des graphismes très variés peuvent être appliqués au moyen d'un store d'impression. Ils peuvent être constitués d'inscriptions réglementaires ou de fantaisie, de dessins originaux ou non. Ces graphismes peuvent notamment reproduire des marques de commerce déposées et/ou des délimitations des portions du fromage. Le store représenté à la figure 2 permet ainsi d'obtenir un fromage portant un graphisme reproduisant à la fois une marque déposée et délimitant des portions, tel que représenté à la figure 3.

Selon un autre mode de réalisation avantageux de l'invention, le graphisme est imprimé en creux sur le talon.

Pour réaliser cette impression on peut avoir recours notamment à des dispositifs destinés à enserrer le fromage, s'appliquant sur au moins une partie du talon et portant sur les parties destinées à être en contact avec le talon du fromage le graphisme en relief, symétrique par rapport à un plan, du graphisme à imprimer en creux sur ce talon.

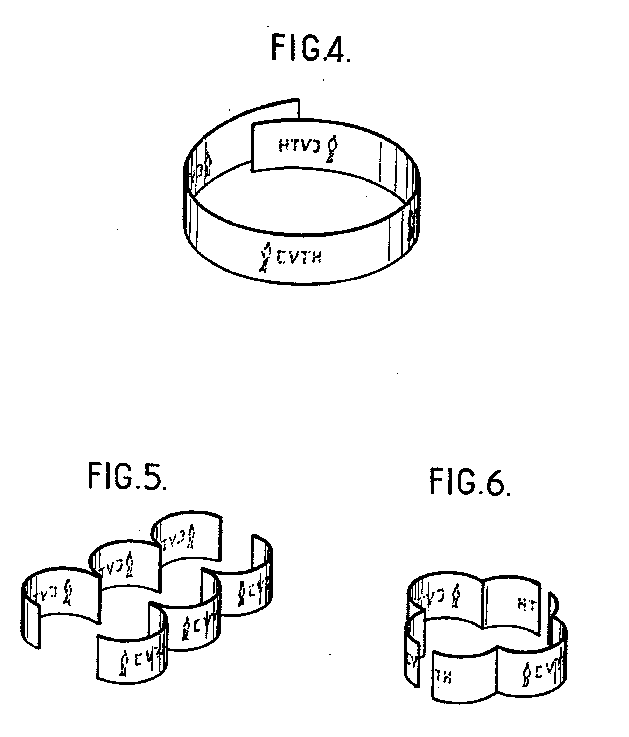

Les figures 4, 5 et 6 représentent, de façon non limitative, des exemples de tels dispositifs.

La figure 4 représente une bande semi-rigide, flexible, en polypropylène par exemple, destinée à être appliquée sur le talon d'un fromage de forme essentiellement ronde pendant un temps suffisant pour que le graphisme s'imprime de façon indélébile, éventuellement pendant toute la durée de l'égouttage. Il n'est pas nécessaire que cette bande comporte, comme le store utilisé pour l'impression des faces, des perforations.

La figure 5 représente un ensemble rigide réalisé par exemple en polypropylène ou polyéthylene destiné à imprimer simultanément plusieurs fromages (ici 3). Il est constitué de deux séries de 'demi-coquilles' accolées portant à l'intérieur un graphisme en relief.

Avantageusement, cet ensemble a sensiblement la hauteur finale désirée du fromage. Il peut alors servir de moule et être maintenu en place jusqu'à la fin du salage.

Enfin, la figure 6 représente un dispositif d'impression en talon pour un fromage de forme particulière comportant une symétrie (ici forme 'à quatre pétales'). Il est constitué, comme le dispositif de la figure 5, de deux 'demi-coquilles' en matériau rigide et a avantageusement une hauteur voisine de la hauteur finale désirée pour le fromage à imprimer. Ce dispositif est utilisé dans les mêmes conditions que celui de la figure 5.

Quel que soit le graphisme réalisé sur le fromage et son mode de réalisation, dans une étape subséquente on produit des colorations différentes sur le graphisme et sur la surface sensiblement plane dans laquelle il est imprimé, par croissance de microorganismes différents, au cours de l'affinage.

On sait que la coloration naturelle des fromages est due à la croissance de microorganismes tels que bactéries, levures, moisissures qui se développent spontanément ou après ensemencement, au cours de l'affinage.

Ainsi, sur les fromages à croûte fleurie comme le camembert se développent des moisissures donnant une 'fleur' blanche ou bleutée, tandis que sur les fromages à croûte 'lavée' tels que le munster se développent des bactéries qui donnent une croûte ocre ou rougeâtre par exemple.

Certes, comme il a été indiqué précédemment, dans le cas simple où la décoration du fromage résulte de la simple juxtaposition d'au moins deux colorations différentes sur les faces et le talon, on peut par exemple faire croître sur ces différentes parties du fromage des microorganismes donnant des colorations différentes, par exemple des bactéries sur l'une des faces ou les deux ('croûte lavée') et des moisissures sur le talon et éventuellement l'autre face ('croûte fleurie'), ou l'inverse.

Cependant on obtient un décor souvent plus utile et attrayant si on combine l'impression d'un graphisme, de préférence en creux, avec des différences de coloration entre le graphisme et la surface plane environnante.

Ainsi par exemple, dans le cas préféré d'un fromage, notamment à pâte molle, comportant sur l'une de ses faces un graphisme d'identification et/ou de délimitation des portions, imprimé en creux, on peut faire croître une moisissure, par exemple du type Penicillium, dans les creux, tandis que sur le plat de la face on fait croître une bactérie, par exemple de type Bacterium linens ('croûte lavée'). On obtient ainsi un fromage ayant une face nettement bicolorée (figure 3).

Comme moisissures pouvant être utilisées pour donner une coloration à la croûte des fromages selon l'invention, on peut citer à titre d'exemples:
- Penicillium candidum qui donne une coloration blanche
- Geotricum candidum qui donne une coloration blanc-rosé
- Penicillium glaucum qui donne une coloration bleutée.

Comme bactéries pouvant être utilisées pour donner une coloration à la croûte des fromages selon l,invention, on peut citer à titre d'exemple:
- Bacterium linens qui donne une coloration ocre.

Ces moisissures et/ou bactéries peuvent être combinées entre elles pour colorer les fromages décorés selon l'invention, dans la mesure où elles donnent des colorations différentes.

L'invention sera mieux comprise grâce aux exemples détaillés de mise en oeuvre de l'invention suivants.

## EXEMPLE 1

**Obtention d'un fromage à pâte molle, avec un motif en creux sur l'une de ses faces bicolorée par croissance de microorganismes différents.**

**A. Impression du motif :**

Après moulage du fromage de la façon habituelle en moules individuels ou en blocs-moules commence l'égouttage. Celui-ci comprend un premier retournement, en general dans la première heure, puis un second retournement, le plus souvent quatre à six heures après le moulage, ces durées pouvant évidemment varier suivant les types de produits fabriqués.

La première phase d'égouttage peut comprendre un nombre variable de retournements mais fréquemment on ne pratique que deux retournements au cours de cette première phase d'égouttage, le second ayant lieu lorsque :
- le volume du fromage est voisin du volume final désire;
- la cohésion du fromage est suffisante pour que les risques de déformation par descente dans le moule (cuvette) soient réduits ;
- l'exsudation du sérum est extrêmement limitée ; et
- le fromage est chaud, souple et malléable.

En général, à ce stade l'acidification du produit n'est pas terminée. Le fromage doit rester au repos dans son moule pendant plusieurs heures (en général au moins 10) avant le démoulage final puis le salage.

Au dernier retournement du fromage, c'est-àdire dans la plupart des cas au deuxième retournement au bout d'environ 4 à 6 heures, le store d'impression se substitue au store d'égouttage initialement utilisé et c'est sur le store d'impression que se poursuit l'égouttage jusqu'au démoulage qui a lieu, dans la plupart des cas, environ 24 heures après le dernier retournement où a lieu la mise en place du store d'impression.

Après démoulage et enlèvement du store d'impression, on effectue le salage soit au bain de saumure soit au sel fin. Le refroidissement à une température d'environ 12°C du fromage avant ou pendant le salage permet le raffermissement de la pàte, ce qui contribue à conserver intacte l'impression obtenue au cours du dernier stade d'égouttage. A ce stade, le motif est bien imprimé en creux dans la face par ailleurs plane et pratiquement lisse du fromage qui a été en contact avec le store d'impression.

Il est également possible d'effectuer l'impression lorsque le fromage est démoulé. On peut avantageusement alors poser le fromage démoulé sur la face imprimante du store d'impression, lui-même posé directement sur une claie de salage, en particulier dans le cas du salage en bain de saumure. Il est avantageux de procéder ainsi lorsque l'ensemble des différentes phases d'égouttage est très limité dans le temps, notamment lorsqu'on fabrique des fromages à püte molle par un procédé selon lequel le travail mécanique d'égouttage du caillé est accentué, par exemple dans le cas d'une fabrication en 'cuves multiples' avec lavage du caillé.

**B. Affinage et mise en valeur de l'impression :**

La mise en valeur de l'impression du fromage, tel que par exemple celui représenté à la figure 3, <u>résulte du</u> développ-ement de micro-organismes différents dans les 'creux' imprimés et sur la partie pratiquement plane de la face imprimée. Par exemple, (cas du fromage représenté à la figure 3) dans les creux et sur le talon on laisse se développer une moisissure de type Penicillium, par exemple Penicillium candidum qui donne une coloration blanche, et on fait croître sur les parties planes de la face traitée une bactérie, par exemple Bacterium linens, appelée 'ferment du rouge', qui donne une coloration ocre.

Après salage, le fromage est ensemencé par pulvérisation, sur l'ensemble de sa surface, avec du Penicillium candidum. La phase d'affinage commence au hàloir. A ce stade, le pH de la surface du fromage voisin de 5 est favorable au bon développement (germination puis pousse) de Penicillium candidum. Vers le cinquième ou sixième jour, le Penicillium candidum apparaît sur toute la surface ; il est alors trés fragile du fait de son faible accrochage à la croûte, mais il s'implante très vite. Dés le septième jour environ, on peut effectuer un premier frottage de la face imprimée du fromage. L'implantation du Penicillium candidum a contribué à faire augmenter le pH de la croûte du fromage pour l'amener à une valeur devenue favorable au développement du ferment du rouge (pH voisin de 6 et au-dessus).

Le frottage est effectué dans des conditions telles que seules les parties planes de la face soient touchées, tandis que se poursuit l'implantation du Penicillium candidum dans les parties en creux du graphisme imprimé.

Le frottage déstabilise le Penicillium candidum (destruction momentanée) et alors le Bacterium linens qui est en compétition avec le Penicillium candidum pour 'occuper le terrain' commence à se développer. Dans les jours suivants, le Penicillium candidum, en pleine phase de croissance, se développe de nouveau sur les parties frottées et il est nécessaire de recommencer l'opération de frottage en général toutes les 48 heures jusqu'à l'apparition généralisée du Bacterium linens ou 'ferment du rouge' sur les parties frottées du fromage. Vers le onziéme ou douziéme jour d'affinage, le Penicillium candidum détruit à plusieurs reprises n'est plus apte à se développer de nouveau sur les parties frottées (phase de déclin de la croissance et pH devenu trop élevé). A l'inverse, le pH de la croûte étant devenu favorable au bon développement de Bacterium linens, celui-ci apparaît et occupe rapidement toute la surface frottée du fromage.

Au bout de douze à quatorze jours environ, la sélection des flores est faite et le résultat attendu est atteint. Le fromage apparaît de couleur ocre qui s'accentue avec le développement progressif de Bacterium linens sur les surfaces frottées, et de couleur blanche dans l'impression gravée faisant ressortir trés nettement les motifs. Le Penicillium candidum est à ce moment-là bien 'accroché' sur le fromage. Le fromage ainsi obtenu est représenté à la figure 3.

Le talon et l'autre face sont chacun colorés comme le graphisme ou la partie plane de la face décorée, selon le traitement qu'on leur a fait subir.

## EXEMPLE 2

**Obtention d'un fromage à pâte pressée avec un motif en creux sur l'une de ses faces bicolorée par croissance de microorganismes différents :**

A la sortie de la presse, le fromage moulé encore chaud et souple reste en salle d'égouttage pour prolonger l'acidification pendant une dizaine d'heures en genéral, voire plus. Dans ce cas, l'impression du fromage peut avantageusement se faire pendant cette période de repos en posant simplement le fromage sur un store d'impression ou une plaque d'impression jusqu'au démoulage final, et avant le salage.

Les étapes suivantes de la fabrication du fromage sont réalisées comme à l'exemple 1.

## EXEMPLE 3

**Obtention d'un fromage à pâte molle, avec un motif en creux sur le talon bicoloré par croissance de microorganismes différents :**

L'impression du graphisme sur le talon est réalisée au moyen de dispositifs tels que ceux représentés aux figures 4, 5 et 6 des dessins annexés, décrites plus haut.

En régle générale, le dispositif d'impression tel que notamment l'un de ceux représentés aux figures 4, 5 et 6 qui comporte un graphisme en relief sur sa partie interne, enserre le fromage en exerçant sur lui une pression. Il peut être mis en place, comme dans le cas des exemples 1 et 2, à un stade avancé de l'égouttage. Avantageusement cependant, notamment lorsqu'il s'agit d'un bloc rigide du type de ceux représentés aux figures 5 et 6, qui ont de préférence une hauteur voisine de la hauteur finale du fromage, il reste en place pendant le salage et n'est retiré que lorsque ce dernier est termine.

Les opérations ultérieures d'affinage et de mise en valeur de l'impression sont réalisées en analogie avec ce qui est décrit â l'exemple 1.

## EXEMPLE 4

**Obtention d'un fromage à pâte molle dont le décor est constitué par une différence de coloration entre le talon et au moins l'une des faces.**

Pour obtenir un tel fromage représenté à titre d'exemple par la figure 1, on procède comme décrit â l'exemple 1, si ce n'est qu'on omet le stade d'impression de l'une des faces.

### Revendications

Pour les états contractants: BE,CH,DE,FR,GB,IT,LI,LU,NL,SE

1. Fromage décoré de façon permanenre et indélébile, caractérisé en ce que son décor, faisant partie intégrante de la croûte et inséparable de celle-ci, présente au moins deux colorations différentes obtenues par croissance de microorganismes différents.

2. Fromage selon la revendication 1, caractérisé en ce que son talon présente une coloration différente de celle d'au moins l'une de ses faces.

3. Fromage selon la revendication 1 ou 2, caractérisé en ce qu'au moins une de ses faces et/ou son talon comprend une surface sensiblement plane dans laquelle est incorporé un graphisme en creux ou en relief et en ce que la surface sensiblement plane et le graphisme sont colorés différemment par croissance de microorganismes différents.

4. Fromage selon la revendication 3, caractérisé en ce que l'une de ses faces est constituée d'une surface sensiblement plane dans laquelle est incorporé un graphisme en creux.

5. Fromage selon la revendication 3, caractérisé en ce que son talon comprend une surface sensiblement plane dans laquelle est incorporé un graphisme en creux.

6. Procédé pour la fabrication du fromage selon 1,une des revendications 3 à 5, caractérisé en ce qu'il comprend:
   - une étape consistant à imprimer avant l'affinage, de préférence à un stade avancé de l'égouttage, un graphisme sur une surface sensiblement plane d'au moins l'une des faces et/ ou du talon du fromage ; et après l'impression de ce graphisme,

- une étape consistant à produire des colorations différentes sur la surface sensiblement plane et sur le graphisme par croissance de microorganismes différents, au cours de l'affinage.

7. Procédé selon la revendication 6, caractérisé en ce que les microorganismes sont choisis parmi : Penicillium candidum, Geotricum candidum, Penicillium glaucum et Bacterium linens.

8. Procédé selon la revendication 6 ou 7, caractérisé en ce que l'impression en creux sur au moins l'une des faces est effectuée au moyen d'un store d'impression portant, en relief, le graphisme, symétrique par rapport à un plan, du graphisme à imprimer.

9. Procédé selon la revendication 6 ou 7, caractérisé en ce que l'impression en relief sur au moins l'une des faces est effectuée au moyen d'un store d'impression portant, en creux, le graphisme, symétrique par rapport à un plan, du graphisme à imprimer.

10. Procédé selon l'une des revendications 6 à 8, caractérisé en ce que l'impression en creux sur le talon est effectuée au moyen d'un dispositif enserrant le fromage et portant sur sa partie interne un graphisme en relief, symétrique par rapport à un plan, du graphisme à imprimer.

11. Store d'impression pour la mise en oeuvre du procédé selon la revendication 8, caractérisé en ce qu'il comprend essentiellement une plaque semi-rigide (1) qui comporte une multitude de perforations (2 et 4) et porte, sur au moins l'une de ses faces, un graphisme (3), en relief, ayant une structure telle qu'il soit capable de s'imprimer de façon indélebile dans le fromage lorsqu'il est mis en contact avec lui notamment à un stade avancé de l'égouttaqe.

12. Dispositif pour la mise en oeuvre du procédé selon la revendication 10, caractérisé en ce qu'il comprend essentiellement une bande semi-rigide ou deux 'demi-coquilles' destinées à enserrer le ou les fromage(s) à imprimer, lesquelles bande ou 'demi-coquilles' portent sur leur partie interne un graphisme en relief, symétrique par rapport à un plan, du graphisme à imprimer.


**Revendications** pour l'état contractant AT

1. Procédé pour la fabrication d'un fromage décore de façon permanente et indélébile, caractérisé en ce qu'il consiste à le munir d'un décor, faisant partie intégrante de la croûte et inséparable de celle-ci, qui présente au moins deux colorations différentes obtenues par croissance de microorganismes différents.

2. Procédé selon la revendication 1, caractérisé en ce qu on munit le talon du fromage d'une coloration différente de celle d'au moins 1 une de ses faces.

3. Procédé pour la fabrication d'un fromage décoré de façon permanente et indélébile, caractérisé en ce qu'il comprend :

- une étape consistant à imprimer avant l'affinage, de préférence à un stade avancé de l'égouttage, un graphisme sur une surface sensiblement plane d'au moins l'une des faces et/ou du talon du fromage ; et après l'impression de ce graphisme,

- une étape consistant à produire des colorations différentes sur la surface sensiblement plane et sur le graphisme par croissance de microorganismes différents, au cours de 1 affinage.

4. Procédé selon la revendication 3,caractérisé en ce que les microorganismes sont choisis parmi : Penicillium candidum, Geotricum candidum, Penicillium glaucum et Bacterium linens.

5. Procédé selon la revendication 3 ou 4, caractérisé en ce que 1 impression en creux sur au moins l'une des faces est effectuée au moyen d un store d impression portant, en relief, le graphisme, symétrique par rapport à un plan, du graphisme à imprimer.

6. Procédé selon la revendication 3 ou 4, caractérisé en ce que l'impression en relief sur au moins l'une des faces est effectuée au moyen d'un store d'impression portant, en creux, le graphisme, symétrique par rapport à un plan, du graphisme à imprimer.

7. Procédé selon l'une des revendications 3 à 5 caractérisé en ce que l'impression en creux sur le talon est effectuée au moyen d'un dispositif enserrant le fromage et portant sur sa partie interne un graphisme en relief, symétrique par rapport à un plan, du graphisme à imprimer.

8. Store d'impression pour la mise en oeuvre du procédé selon la revendication 5, caractérisé en ce qu'il comprend essentiellement une plaque semi-rigide (1) qui comporte une multitude de perforations (2 et 4) et porte, sur au moins l'une de ses faces, un graphisme (3), en relief, ayant une structure telle qu il soit capable de s'imprimer de façon indélébile dans le fromage lorsqu il est mis en contact avec lui notamment à un stade avancé de l'égouttage.

9. Dispositif pour la mise en oeuvre du procéde selon la revendication 7, caractérisé en ce qu'il comprend essentiellement une bande semi-rigide ou deux 'demi-coquilles' destinées à enserrer le ou les fromage(s) à imprimer, lesquelles bande ou 'demi-coquilles' portent sur leur partie interne un graphisme en relief, symétrique par rapport a un plan, du graphisme à imprimer.

**Patentansprüche:** für den Vertragsstaat: AT

1. Verfahren zur Herstellung eines permanent und unauslöschlich verzierten Käses, dadurch gekennzeichnet, daß es darin besteht, den Käse mit einer Verzierung auszustatten, welche einen integrierenden Bestandteil der Rinde darstellt und von derselben untrennbar ist und welche wenigstens zwei unterschiedliche Färbungen aufweist, welche durch das Wachstum von unterschiedlichen Mikroorganismen erhalten worden sind.

2. Verfahren nach Anspruch 1, dadurch gekennzeichnet, daß man die Kante des Käses mit einer unterschiedlichen Färbung von jener von wenigstens ainer seiner Hauptseiten versieht.

3. Verfahren zur Herstellung eines permanent und unauslöschlich verziertan Käses, dadurch gekennzeichnet, daß as umfaßt:

- eine Stufe, welche im Aufdrucken, vor der Affination, vorzugsweise in einem fortgeschrittenen Stadium der Entwässerung, einer graphischen Darstellung auf eine im wesentlichen ebene Oberfläche von wenigstens einer der Hauptseiten und/oder auf die Kante des Käses besteht; und, nach dem Aufdrucken dieser graphischen Darstellung,

- eine Stufe, welche im Erzeugen, im Verlaufe der Affination, von unterschiedlichen Färbungen auf der im wesentlichen ebenen Oberfläche und auf der graphischen Darstellung aufgrund des Wachstums von unterscheidlichen Mikroorganismen besteht.

4. Verfahren nach Anspruch 3, dadurch gekennzeichnet, daß die Mikroorganismen ausgewählt werden aus: Penicillium candidum, Geotricum candidum, Penicillium glaucum und Bacterium linens.

5. Verfahren nach Anspruch 3 oder 4, dadurch gekennzeichnet, daß das Aufdrucken in der Form von Vertiefungen auf wenigstens einer der Hauptseiten mittels einer Druckmatrize bewirkt wird, welche in der Form von Erhöhungen die symmetrisch in bezug auf einen Grundriß der aufzudruckenden graphischen Darstellung angeordnete graphische Darstellung trägt.

6. Verfahren nach Anspruch 3 oder 4, dadurch gekennzeichnet, daß das Aufdrucken in der Form von Erhöhungen auf wenigstens einer der Hauptseiten mittels einer Druckmatrize bewirkt wird, welche in der Form von Vertiefungen die symmetrisch in bezug auf einen Grundriß der aufzudruckenden graphischen Darstellung angeordnete graphische Darstellung trägt.

7. Verfahren nach einem der Ansprüche 3 bis 5, dadurch gekennzeichnet, daß das Aufdrucken in der Form von Vertiefungen auf die Kante mittels einer Vorrichtung bewirkt wird, welche den Käse einschließt und welche auf ihrem Innenteil eine symmetrisch in bezug auf einen Grundriß der aufzudruckenden graphischen Darstellung angeordnete graphische Darstellung in der Form von Erhöhungen trägt.

8. Druckmatrize zur Durchführung des Verfahrens nach Anspruch 5, dadurch gekennzeichnet, dass sie im wesentlichen eine halbsteife Platte (1) die eine mehrzahl Löcher (2 und 4) aufweist und auf wenigstens einer ihrer Hauptseiten eine graphische Darstellung (3) in der Form von Erhöhungen trägt, welche letztgenannte solcherart aufgebaut ist, daß sie auf unauslöschliche Art und Weise in den Käse eingedrückt werden kann, wenn derselbe mit ihr, insbesondere in einem fortgeschritten en Stadium der Entwässerung, in Berührung gebracht wird.

9. Vorrichtung zur Durchführung des Verfahrens nach Anspruch 7, dadurch gekennzeichnet, daß sie im wesentlichen ein halbsteifes Band oder zwei 'Halbschalen' umfaßt, welches Band bzw. welche 'Halbschalen' dazu bestimmt sind, den zu bedruckenden Käse bzw. die zu bedruckenden Käseeinheiten einzuschließen, wobei das genannte Band bzw. die genannten 'Halbsschalen' auf ihrem Innenteil eine symmetrisch in bezug auf einen Grundriß der aufzudruckenden graphischen Darstellung angeordnete graphische Darstellung in der Porm von Erhöhungen tragen.

**Patentansprüche** für die Vertragsstaaten Be CH DE FR GB IT LI LU NL SE:

1. Permanent und unauslöschlich verzierter Käse, dadurch gekennzeichnet, daß seine Verzierung, welche einen integrierenden Bestandteil der Rinde darstellt und von derselben untrennbar ist, wenigstens zwei unterschiedliche Färbungen aufweist, welche durch das Wachstum von unterschiedlichen Mikroorganismen erhalten worden sind.

2. Käse nach Anspruch 1, dadurch gekennzeichnet, daß seine Kante eine unterschiedliche Färbung von jener von wenigstens einer seiner Hauptseiten aufweist.

3. Käse nach Anspruch 1 oder 2, dadurch gekennzeichnet, daß wenigstens eine siner Huaptseiten und/oder sine kante eine im wesentlichen ebene Oberfläche umfaßt, in welcher eine graphische Darstellung in der Form von Vertiefungen oder in der Form von Erhöhungen einverleibt ist, und daß die im wesentlichen ebene Oberfläche und die graphische Darstellung aufgrund des Wachstums von unterschiedlichen Mikroorganismen unterschieldlich gefärbt sind.

4. Käse nach Anspruch 3, dadurch gekennzeichnet, daß eine seiner Hauptseiten aus einer im wesentlichen ebenen Oberfläche besteht, in welcher eine graphische Darstellung in der Form von Vertiefungen einverleibt ist.

5. Käse nach Anspruch 3, dadurch gekennzeichnet, daß seine Kante eine im wesentlichen ebene Oberfläche umfaßt, in welcher eine graphische Darstellung in der Form von Vertiefungen einverleibt ist.

6. Verfahren zur Herstellung des Käses nach einem der Ansprüche 3 bis 5, dadurch gekennzeichnet, daß es umfaßt:
- eine Stufe, welche im Aufdrucken, vor der Affination, vorzugsweise in einem fort eschrittenen Stadium der Entwässerung, einer graphischen Darstellung auf eine im wesentlichen ebene Oberfläche von wenigstens einer der Hauptseiten und/oder aus die Kante des Käses besteht; und, nach dem Aufdrucken dieser graphischen Darstellung,
- eine Stufe, welche im Erzeugen, im Verlaufe der Affination, von unterschiedlichen Färbungen auf der im wesentlichen ebenen Oberfläche und auf der graphischen Darstellung aufgrund des Wachstums von unterschiedlichen Mikroorganisme besteht.

7. Verfahren nach Anspruch 6, dadurch gekennzeichnet, daß die Mikroorganismen ausgewählt werden aus: Penicillium candidum, Geotricum candidum, Penicillium glaucum und Bacterium linens.

8. Verfahren nach Anspruch 6 oder 7, dadurch gekenmzeichnet, daß das Aufdrucken in der Form von Vertiefungen auf wenigsten einer der Hauptseiten mittels einer Druckmatrize bewirkt wird, welche in der Form von Erhöhungen die symmetrisch in bezug auf einen Grundriß der aufzudruckenden graphischen Darstellung angeordnete graphische Darstellung trägt.

9. Verfahren nach Anspruch 6 oder 7, dadurch gekennzeichnet, daß das Aufdrucken in der Form von Erhöhungen auf wenigstens einer der Hauptseiten mittels einer Druckmatrize bewirkt wird, welche in der Form von Vertiefungen die symmetrisch in bezug auf einen Grundriß der aufzudruckenden graphischen Darstellung angeordnete graphische Darstellung trägt.

10. Verfahren nach einem der Ansprüche 6 bis 8, dadurch gekennzeichnet, daß das Aufdrucken in der Form von Vertiefungen auf die Kante mittels einer Vorrichtung bewirkt wird, welche den Käse einschließt und welche auf ihrem Innenteil eine symmetrisch in bezug auf einen Grundriß der aufzudruckenden graphischen Darstellung angeordnete graphische Darstellung in der Form von Erhöhungen trägt.

11. Druckmatrize zur Durchführung des Verfahrens nach Anspruch 8, dadurch gekennzeichnet, dass sie im wesentlichen eine Halbsteife Platte (1) die eine mehrzahl Löcher (2 und 4) aufweist und auf wenigstens einer ihrer Hauptseiteneine graphische Darstellung (3) in der Form von Erhöhungen trägt, welche letztgenannte solcherart aufgebaut ist, daß sie auf unauslöschliche Art und Weise in den Käse eingedrückt werden kann, wenn derselbe mit ihr, insbesondere in einem fortgeschrittenen Stadium der Entwässerung, in Berührung gebracht wird.

12. Vorrichtung zur Durchführung des Verfahrens nach Anspruch 10, dadurch gekennzeichnet, daß sie im wesentlichen ein halbsteifes Band oder zwei 'Halbschalen' umfaßt, welches Band bzw. welche 'Halbschalen' dazu bestimmt sind, den zu bedruckenden Käse bzw. die zu bedruckenden Käseeinheiten einzuschließen, wobei das genannte Band bzw. die genannten auf einen Grundriß der aufzudruckenden graphischen Darstellung angeordnete graphische Darstellung in der Form von Erhöhungen tragen.

**Claims** for the contracting state : AT

1. A process for manufacturing a permanently and indelibly decorated cheese, characterised in that it consists in providing the cheese with a decoration, forming an integral part of the rind and inseparable therefrom, which has at least two different colorations obtained by growth of different micro-organisms.

2. A process according to claim 1, characterised in that the peripheral surface of the cheese is provided with a coloration different from that of at least one of its faces.

3. A process for manufacturing a permanently and indelibly decorated cheese, characterised in that it comprises :
- a step consisting in impressing before maturing, preferably at an advanced stage of draining, a graphic pattern in one substantially flat surface of at least one of the faces and/or of the peripheral surface of the cheese, and after impressing this graphic pattern,
- a step consisting in producing different colorations on the substantially flat surface and on the graphic pattern by growth of different micro-organisms, during maturing.

4. A process according to claim 3, characterised in that the micro-organisms are chosen from : penicillium candidum, Geotricum candidum , penicillium glaucum and Bacterium linens.

5. A process according to claim 3 or 4, characterised in that the sunken impression in at least one of the faces is formed by means of a printing draining board bearing, in relief, the graphic pattern, symmetrical with respect to a plane, of the graphic pattern to be impressed.

6. A process according to claim 3 or 4, characterised in that the relief impression in at least one of the faces is achieved by means of a printing draining board bearing the sunken graphic pattern, symmetrical with respect to a plane, of the graphic pattern to be impressed.

7. A process according to one of claims 3 to 5, characterised in that the sunken impression in the peripheral surface is provided by means of a device embracing the cheese and bearing on its inner part a relief graphic pattern, symmetrical with respect to a plane, of the graphic pattern to be impressed.

8. A printing draining board for implementing the process according to claim 5, characterised in that it comprises essentially a semi-rigid plate (1) which comprises a multitude of perforations (2 and 4) and bears, on at least one of its faces, a relief graphic pattern (3) having a structure such that it is capable of being indelibly impressed in the cheese when it is placed in contact therewith, particularly at an advanced stage of draining.

9

9. A device for implementing the process according to claim 7, characterised in that it comprises essentially a semi-rigid strip or two 'half-shells' for encompassing the cheese or cheeses to be impressed, which strip or 'half-shells' bear on their inner part a relief graphic pattern symmetrical with respect to a plane, of the graphic pattern to be impressed.

**Claims** for the contracting states : BE CH DE FR GB,IT,LI,LU, NL, SE

1. A permanently and indelibly decorated cheese, characterised in that its decoration, forming an integral part of the rind and inseparable therefrom, has at least two different colorstions obtained by growth of different micro-organisms.

2. A cheese according to claim 1, characterised in that its peripheral surface has a coloration different from that of at least one of its faces.

3. A cheese according to claim 1 or 2, characterised in that at least one of its faces and/or its peripheral surface comprises a subst ntially flat surface in which is incorporated a sunken or relief graphic pattern and in that the substantially flat surface and the graphic pattern are coloured differently by growth of different micro-organisms.

4. A cheese according to claim 3, characterised in that one of its faces is formed by a substentially flat surface in which is incorporated a sunken graphic pattern.

5. A cheese according to claim 3, characterised in that its peripheral surface comprises a substantially flat surface in which is incorporated a sunken graphic pattern. ⋅

6. A process for manufacturing the cheese according to one of claims 3 to 5, characterised in that it comprises:
- a step consisting in impressing before maturing, preferably at an advanced stage of draining, a graphic pattern in one substantially flat surface of at least one of the faces and/or of the peripheral surface of the cheese, and after impressing this graphic pattern,
- a step consisting in producing different colorations on the substantially flat surface and on the graphic pattern by growth of different micro-organisms, during maturing.

7. A process according to claim 6, characterised in that the micro-organisms are chosen from : Penicillium candidum, Geotricum candidum, Penicillium glaucum and Bacterium linens.

8. A process according to claim 6 or 7, characterised in that the sunken impression in at least one of the faces is formed by means of a printing draining board bearing, in relief, the graphic pattern, symmetrical with respect to a plane, of the graphic pattern to be impressed.

9. A process according to claim 6 or 7, characterised in that the relief impression in at least one of the faces is achieved by means of a printing draining board bearing the sunken graphic pattern, symmetrical with respect to a plane, of the graphic pattern to be impressed.

10. A process according to one of claims 6 to 8, characterized in that the sunken impression in the peripheral surface is provided by means of a device embracing the cheese and bearing on its inner part a relief graphic pattern, symmetrical with respect to a plane, of the graphic pattern to be impressed.

11. A printing draining board for implementing the process according to claim 8, characterised in that it comprises essentially a sami-rigid plate (1) which comprises a multitude of perforations (2 and 4) and bears, on at least one of ita faces, a relief graphic pattern (5) having a structure such that it is capable of being indelibly impressed in the cheese when it is placad in contact therewith, particularly at an advancad stage of draining.

12. A device for implementing the process according to claim 10, characterised in that it comprises essentially a semi-rigid strip or two 'half-shells' for encompassing the cheese or cheeses to be impreaaed, which strip or 'halfshells' bear on their inner part a relief graphic pattern aymmetrical with respect to a plane, of the graphic pattern to be impressed.

0 090 737

FIG.2.

FIG.1.

FIG.3.

# FIG.4.

# FIG.5.

# FIG.6.